# EUROPEAN PATENT SPECIFICATION

(11) **EP 3 860 045 B1**
(45) Date of publication and mention of the grant of the patent: **16.08.2023**
(21) Application number: 19881928.6
(22) Date of filing: 11.10.2019
(51) Int. Cl.: H04L 12/12, H04L 12/40, G06F 1/3209, H04L 41/04, H04L 41/34

(54) **DYNAMICALLY ADJUSTING THE LPI MODE OF ENERGY-EFFICIENT ETHERNET**
DYNAMISCHE ANPASSUNG DES LPI-MODUS VON ENERGY-EFFICIENT ETHERNET
AJUSTEMENT DYNAMIQUE DU MODE LPI D'UN ENERGY-EFFICIENT ETHERNET

(30) Priority: 08.11.2018 CN 201811327156
(43) Date of publication of application: 04.08.2021
(73) Proprietor: Huawei Technologies Co., Ltd., Shenzhen Guangdong 518129 (CN)
(72) Inventor: WANG, Xuehuan, Shenzhen, Guangdong 518129 (CN); ZHANG, Xingxin, Shenzhen, Guangdong 518129 (CN)
(74) Representative: Thun, Clemens
(86) International application number: PCT/CN2019/110507
(87) International publication number: WO 2020/093835

(56) References cited:
- CN-A- 101 409 661
- CN-A- 101 989 926
- US-A1- 2009 204 836
- US-A1- 2009 282 277
- US-A1- 2011 022 699
- US-A1- 2013 016 736
- US-A1- 2013 054 995
- US-A1- 2014 112 663

## Description

### TECHNICAL FIELD

Embodiments of this application relate to Ethernet technologies, and in particular, to an Ethernet communication method and apparatus, and an Ethernet device in a low power idle (Low Power Idle, LPI) mode.

### BACKGROUND

To resolve an issue on energy consumption of an Ethernet, the Institute of Electrical and Electronics Engineers (Institute of Electrical and Electronics Engineers, IEEE) proposes an energy efficient Ethernet (Energy Efficient Ethernet) mechanism to implement energy saving of an Ethernet device.

When no data is to be transmitted, a transmit end device may send an LPI mode entering notification to a receive end device, to instruct the receive end device to enter an LPI mode. In the meantime, the transmit end device enters a sleep (sleep) state, and transitions to a quiet ( quiet) state. In a sleep state, a link is absolutely motionless. After the quiet state expires, the transmit end device enters a refresh (refresh) state; and in the refresh state, sends a refresh signal to the receive end device, to detect a link connection between the transmit end device and the receive end device. The quiet state and the refresh state may be repeated for a plurality of periods. If data transmission needs to be resumed, the transmit end device may send an LPI mode exit notification to the receive end device, to instruct the receive end device to exit the LPI mode. In the meantime, the transmit end device enters a wake (wake) state to waken transceivers at the transmit and receive ends, and transitions to an active (active) state. After entering the active state, both of the transmit and receive end devices can perform data transmission.

In an existing technology, because at a transmission rate, time periods in which the transmit and receive end devices are in various states are fixed, for sporadic data transmission, when the transmit end device and the receive end device enter or exit an LPI mode, going through a sleep state and a wake state consumes a large quantity of bandwidth and energy. This easily causes a waste of bandwidth and energy. The document US 2009/0282277 A1 shows a low-power ideal-mode for network transceivers in communication networks.

The document US 2011/0022699 A1 shows a method and system for PHY initiated wake-up in energy efficient ethernet networks.

### SUMMARY

Embodiments of this application provide an Ethernet communication method and apparatus, and an Ethernet device, to improve an energy saving effect and avoid a waste of bandwidth and energy.

The present invention is defined in the appended independent claims to which reference should be made. Advantageous features are set out in the appended dependent claims.

### BRIEF DESCRIPTION OF DRAWINGS

FIG. 1 is a schematic diagram of device connection scenarios according to an embodiment of this application;
FIG. 2 is a flowchart 1 of an Ethernet communication method according to an embodiment of this application;
FIG. 3 is a flowchart 2 of an Ethernet communication method according to an embodiment of this application;
FIG. 4 is a flowchart 3 of an Ethernet communication method according to an embodiment of this application;
FIG. 5 is a schematic diagram 1 of a device status in an Ethernet communication method according to an embodiment of this application;
FIG. 6 is a schematic diagram 2 of a device status in an Ethernet communication method according to an embodiment of this application;
FIG. 7 is a schematic diagram 3 of a device status in an Ethernet communication method according to an embodiment of this application;
FIG. 8 is a schematic diagram 4 of a device status in an Ethernet communication method according to an embodiment of this application;
FIG. 9 is a schematic diagram 5 of a device status in an Ethernet communication method according to an embodiment of this application;
FIG. 10 is a flowchart 4 of an Ethernet communication method according to an embodiment of this application; FIG. 11 is a schematic diagram 1 of a device status in an Ethernet communication method and a frame structure according to an embodiment of this application;
FIG. 12 is a schematic diagram 2 of a device status in an Ethernet communication method and a frame structure according to an embodiment of this application;
FIG. 13 is a schematic structural diagram 1 of an Ethernet communications apparatus according to an embodiment of this application;
FIG. 14 is a structural diagram 1 of possible product forms of an Ethernet communications apparatus according to an embodiment of this application;
FIG. 15 is a schematic structural diagram 2 of an Ethernet communications apparatus according to an embodiment of this application; and
FIG. 16 is a structural diagram 2 of possible product forms of an Ethernet communications apparatus according to an embodiment of this application.

### DESCRIPTION OF EMBODIMENTS

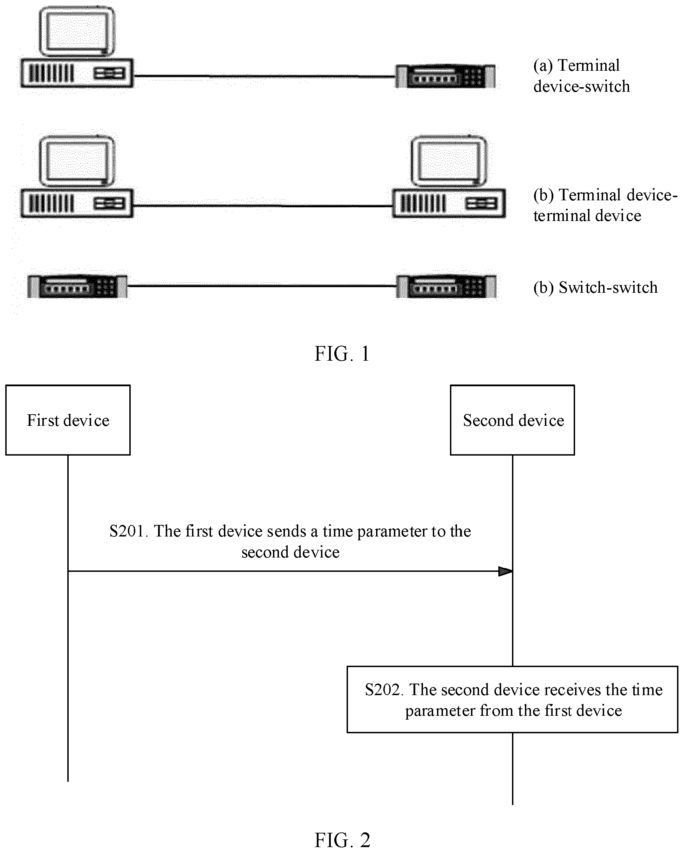

An Ethernet communication method and apparatus, an Ethernet device, and the like that are provided in the embodiments of this application can be applicable to an Ethernet, and in particular, to an energy efficient Ethernet. A device in the Ethernet is a device connected through the Ethernet, and may be a terminal device or a switch. The terminal device may be an Ethernet terminal device, and the switch may be an Ethernet switch. FIG. 1 is a schematic diagram of device connection scenarios according to an embodiment of this application. Various solutions provided in the embodiments of this application can be applicable to three device connection scenarios shown in FIG. 1. In a device connection scenario (a), a terminal device may be connected to a switch through an Ethernet. In a device connection scenario (b), a terminal device may be connected to a terminal device through an Ethernet. In a device connection scenario (c), a switch may be connected to a switch through an Ethernet. In the device connection scenarios, the devices at two ends of the Ethernet may be link partners to each other.

In an existing energy efficient Ethernet technology, devices at two ends of a link may each have five states.
(1) Active state: In the active state, Ethernet ports of the devices at the two ends of the link are both in a normal running state. In this state, there may be data transmission or no data transmission on the link between the transmit and receive end devices. Once there is to-be-transmitted data, the data can be transmitted. The devices at the two ends of the link may complete negotiation and setting of an initial parameter by using an Ethernet auto-negotiation (auto-negotiation) mechanism, to implement initialization. A state under initialization may also be an active state.
(2) Sleep state: The sleep state is a transition state of the Ethernet ports of the devices at the two ends of the link from an active state to a quiet state. Duration of the sleep state may be represented as Tₛ. When obtaining an LPI mode entering notification such as an LPI assert (assert) message, the devices at the two ends of the link enter a sleep state; and after the sleep state expires, enter a quiet state.
(3) Quiet state: In the quiet state, the Ethernet ports of the devices at the two ends of the link are in a quiet state in an LPI mode. In the quiet state, energy saving of the devices at the two ends of the link can be implemented. Duration of the quiet state may be represented as T_{q}.
(4) Refresh state: In the refresh state, a transmit end device may send a refresh signal to a receive end device, to detect a physical connection of the link. Duration of the refresh state is duration of the refresh signal, and may be represented as Tᵣ. The quiet state and the refresh state may be repeated for at least one period, until an LPI mode exit notification such as an LPI de-assert (De-assert) message is obtained.
(5) Wake state: The wake state is a transition stage of the Ethernet ports of the devices at the two ends of the link from a quiet state to an active state. Duration of the wake state may be represented as T_{w}. When obtaining the LPI de-assert message, the devices at the two ends of the link enter a wake state; and after the wake state expires, enter an active state.

In an existing Ethernet technology, because the duration Tₛ of the sleep state, the duration T_{q} of the quiet state, the duration Tᵣ of the refresh state, and the duration T_{w} of the wake state are all fixed time periods, for sporadic data transmission, when the transmit end device and the receive end device enter or exit an LPI mode, going through a sleep state and a wake state consumes a large quantity of bandwidth and energy. This limits an energy saving effect of the devices, and easily causes a waste of bandwidth and energy, especially when a data volume is relatively small. Therefore, the embodiments of this application provide a plurality of Ethernet communication methods as follows, to adjust state duration of the devices at the two ends of the link in the LPI mode, thereby implementing dynamic adjustment of the LPI mode. This avoids a waste of bandwidth and energy while improving an energy saving effect. The following provides detailed descriptions by using a plurality of examples. It should be noted that in the embodiments of this application, a first device and a second device are merely devices used to distinguish between two ends of a link. In other scenarios, the first device and the second device are interchangeable, to perform the following communication methods. FIG. 2 is a flowchart 1 of an Ethernet communication method according to an embodiment of this application. As shown in FIG. 2, the Ethernet communication method provided in this embodiment of this application may include the following steps.

S201. The first device sends a time parameter to the second device.

The time parameter includes a parameter of at least one of the following duration: duration of a quiet state, duration of a refresh state, or total duration, and the total duration is total duration of the quiet state and the refresh state.

The first device is a terminal device, and the second device is a terminal device or a switch; or the first device may be a switch, and the second device is a terminal device or a switch. For example, if the solution is applicable to the device connection scenario (a) shown in FIG. 1, the first device may be a terminal device, and the second device may be a switch; or the first device may be a switch, and the second device may be a terminal device.

If the solution is applicable to the device connection scenario (b) shown in FIG. 1, the first device may be a terminal device, and the second device may also be a terminal device.

If the solution is applicable to the device connection scenario (c) shown in FIG. 1, the first device may be a switch, and the second device may also be a switch.

In the solutions provided in the embodiments of this application, there may be a plurality of implementation examples for the time parameter.

In an example 1, the time parameter may include a duration parameter of the quiet state.

In an example 2, the time parameter may include a duration parameter of the refresh state.

In an example 3, the time parameter may include a duration parameter of the quiet state and a duration parameter of the refresh state.

In an example 4, the time parameter may include a parameter of total duration, and the total duration may be total duration of the quiet state and the refresh state.

In an example 5, the time parameter may include a duration parameter of the quiet state and a parameter of total duration.

In an example 6, the time parameter may include a duration parameter of the refresh state and a parameter of total duration.

In an example 7, the time parameter may include a duration parameter of the quiet state, a duration parameter of the refresh state, and a parameter of total duration.

In an implementation, the first device may send the time parameter to the second device in a refresh state in an LPI mode.

In another implementation, the first device may send the time parameter to the second device in an active state.

In the method, the first device may further adjust state duration in the LPI mode based on the time parameter.

The first device may adjust the state duration in the LPI mode based on the time parameter when the first device has determined the time parameter.

In specific implementation, the first device may adjust corresponding state duration in the LPI mode based on specific information in the time parameter. If the time parameter includes the duration parameter of the quiet state, the first device may adjust the duration of the quiet state in the LPI mode based on the duration parameter of the quiet state. If the time parameter includes the duration parameter of the refresh state, the first device may adjust the duration of the refresh state in the LPI mode based on the duration parameter of the refresh state. If the time parameter includes the parameter of the total duration, the first device may adjust the total duration of the quiet state and the refresh state based on the parameter of the total duration.

If the time parameter includes the duration parameter of the quiet state and/or the duration parameter of the refresh state, the total duration is variable or invariable. If the time parameter includes the parameter of the total duration, the total duration may vary based on the parameter of the total duration.

S202. The second device receives the time parameter from the first device.

An operation of receiving the time parameter by the second device and the foregoing operation of adjusting the state duration in the LPI mode by the first device may be performed simultaneously or may be performed sequentially. The second device adjusts the state duration in the LPI mode based on the time parameter.

A specific implementation of adjusting the state duration in the LPI mode by the second device is similar to the foregoing implementation of adjusting the state duration in the LPI mode by the first device. For details, refer to the foregoing descriptions. Details are not described herein again.

The operation of adjusting the state duration in the LPI mode by the second device and the foregoing operation of adjusting the state duration in the LPI mode by the first device may be performed simultaneously or may be performed sequentially.

According to the Ethernet communication method provided in this embodiment of this application, the first device may send the time parameter to the second device, where the time parameter includes the parameter of the at least one of the following duration: the duration of the quiet state, the duration of the refresh state, or the total duration, and the total duration is the total duration of the quiet state and the refresh state; and the first device adjusts the state duration in the LPI mode based on the time parameter. According to the method, the devices at the two ends of the link in the Ethernet can flexibly adjust the duration of the quiet state and/or the duration of the refresh state in the LPI mode based on the time parameter, to implement dynamic adjustment for energy saving. This can avoid a waste of bandwidth and energy while improving an energy saving effect.

Optionally, regardless of the first device or the second device, the LPI mode may include at least one period, and a quiet state and a refresh state may exist in each period.

In the LPI mode, the quiet state and the refresh state may be repeated for at least one period, and a quiet state and a refresh state exist in each period. In this embodiment of this application, the duration of the quiet state, the duration of the refresh state, the duration of both the quiet state and the refresh state, or the total duration of the quiet state and the refresh state may be adjusted. Therefore, duration in each period may change, and duration in different periods may be identical or different.

The parameter of each type of duration may include a duration parameter in at least one form: a duration value of the type of duration, start and end time of the type of duration, a relationship between the type of duration and preset duration, a relationship between duration of different states, and the like. The relationship between the type of duration and the preset duration may include, for example, a difference between the preset duration and the type of duration, and a ratio between the preset duration and the type of duration. The relationship between the duration of the different states may include a ratio or a difference between duration of a state and duration of another state in the LPI mode, for example, a ratio or a difference between the duration of the quiet state and the duration of the refresh state.

In other words, duration of various states in the LPI mode may be adjusted separately; or duration of a state may be adjusted, so that duration of another state is adjusted.

If the duration of the quiet state included in the time parameter is greater than duration of the quiet state before adjustment, the duration of the quiet state before adjustment may be increased based on the duration of the quiet state. This increases sleep time of the devices, and improves energy saving efficiency.

If the duration of the refresh state included in the time parameter is greater than duration of the refresh state before adjustment, the duration of the refresh state before adjustment may be increased based on the duration of the refresh state. Data transmission is performed in the refresh state, and entering a wake state to perform data transmission is avoided as much as possible, so that an energy saving effect is improved.

If duration in each period is invariable in the LPI mode, the time parameter may include the duration parameter of the quiet state and/or the duration parameter of the refresh state, and may not include the parameter of the total duration. If duration in each period is variable in the LPI mode, the time parameter may include the parameter of the at least one of the following duration: the duration of the quiet state, the duration of the refresh state, or the total duration, and the total duration is the total duration of the quiet state and the refresh state.

For example, duration in each period is invariable, and the time parameter may include the duration of the quiet state. When the duration of the quiet state is greater than duration of the quiet state before adjustment, the duration of the quiet state before adjustment may be increased based on the duration of the quiet state. This reduces the duration of the refresh state, increases sleep time of the devices, and improves energy saving efficiency. When the duration of the quiet state is less than duration of the quiet state before adjustment, the duration of the quiet state before adjustment may be reduced based on the duration of the quiet state. This increases the duration of the refresh state, and reduces sleep time of the devices. Data transmission is performed in the refresh state, and entering a wake state to perform data transmission is avoided as much as possible, so that an energy saving effect is improved.

Duration in each period is invariable, and the time parameter may include the duration of the refresh state. When the duration of the refresh state is greater than duration of the refresh state before adjustment, the duration of the refresh state before adjustment may be increased based on the duration of the refresh state. This reduces the duration of the quiet state, increases the duration of the refresh state, and reduces sleep time of the devices. Data transmission is performed in the refresh state, and entering a wake state to perform data transmission is avoided as much as possible, so that an energy saving effect is improved. When the duration of the refresh state is less than duration of the refresh state before adjustment, the duration of the refresh state before adjustment may be reduced based on the duration of the refresh state. This increases the duration of the quiet state, increases sleep time of the devices, and improves energy saving efficiency.

Certainly, when duration in each period is invariable, if the time parameter includes duration of a state, the time parameter may further include duration of another state.

Optionally, if the first device sends the time parameter to the second device in the refresh state of the LPI, an effective period of the time parameter is a current period, a next period of the current period, N periods following the current period, or an M^{th} period following the current period in the LPI mode, where N and M are integers greater than or equal to 2. The current period may be a period in which the time parameter is sent.

In other words, the effective period of the time parameter is the current period, that is, various duration parameters included in the time parameter are duration parameters in the current period. In this case, the first device and the second device may adjust state duration in the current period in the LPI mode based on the time parameter. Alternatively, the effective period of the time parameter is the next period of the current period, that is, various duration parameters included in the time parameter are duration parameters in the next period of the current period. In this case, the first device and the second device may adjust state duration in the next period of the current period in the LPI mode based on the time parameter.

Alternatively, the effective period of the time parameter is the N periods following the current period, that is, various duration parameters included in the time parameter may be state duration parameters in the N periods following the current period. In this case, the first device and the second device may adjust state duration in the N periods following the current period in the LPI mode based on the time parameter.

Alternatively, the effective period of the time parameter is the M^{th} period following the current period, that is, various duration parameters included in the time parameter may be state duration parameters in the M^{th} period following the current period. In this case, the first device and the second device may adjust state duration in the M^{th} period following the current period in the LPI mode based on the time parameter.

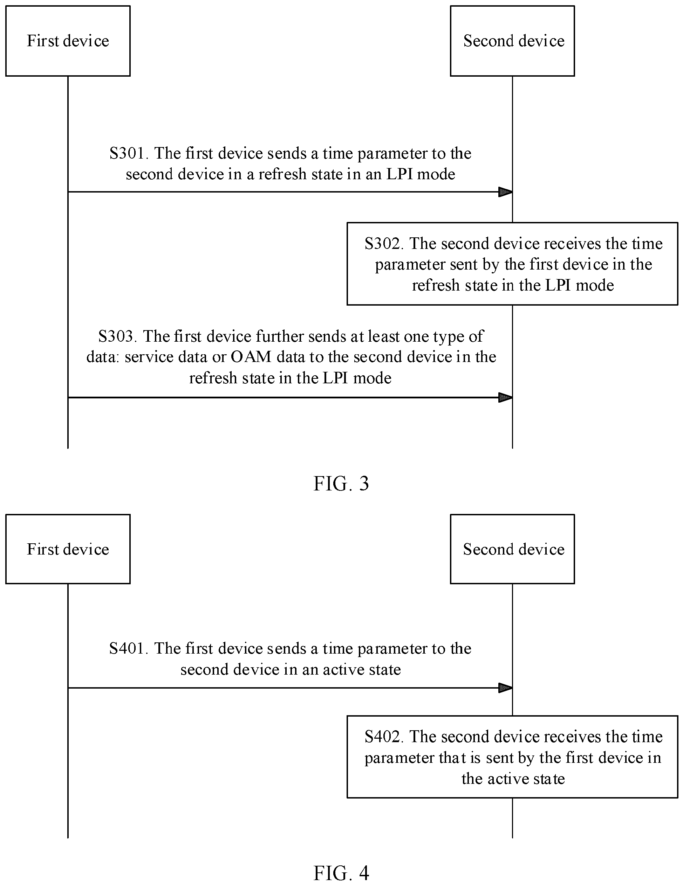

Based on the method shown in FIG. 2, an embodiment of this application may further provide an Ethernet communication method. FIG. 3 is a flowchart 2 of an Ethernet communication method according to an embodiment of this application. The method shown in FIG. 3 may be an example of transmitting a time parameter, service data, and the like. Optionally, that the first device sends a time parameter to the second device described in S201 may include:
S301. The first device sends the time parameter to the second device in a refresh state in an LPI mode.

The first device may send a refresh signal to the second device in the refresh state in the LPI mode, where the refresh signal may include the time parameter.

Optionally, that the second device receives the time parameter from the first device described in S202 may include: S302. The second device receives the time parameter that is sent by the first device in the refresh state in the LPI mode.

According to the method provided in this embodiment, in the refresh state, transmission of the time parameter can improve utilization of the refresh signal. In this way, state duration in the LPI mode can further be adjusted when link fault detection is performed in the refresh state, thereby implementing dynamic adjustment for energy saving.

The first device sends the time parameter to the second device in the refresh state. If an effective period of the time parameter is a current period in which the refresh state is kept, state duration in the current period is adjustable. If an effective period of the time parameter is a next period of the current period in which the refresh state is kept, state duration in the next period is adjustable. If an effective period of the time parameter is N periods following the current period in which the refresh state is kept, state duration of the N periods is adjustable. If an effective period of the time parameter is an M^{th} period following the current period in which the refresh state is kept, state duration of the M^{th} period is adjustable.

Optionally, the foregoing method further includes:
S303. The first device further sends at least one type of data: service data or operations, administration and maintenance (Operations, Administration and Maintenance, OAM) data to the second device in the refresh state in the LPI mode.

In the method, the first device may send the time parameter to the second device in a refresh state in a period, and send the at least one type of data to the second device in a refresh state in another period. The first device may alternatively send the time parameter and the at least one type of data to the second device in a refresh state in one period.

In the method provided in this embodiment, data transmission may further be performed in the refresh state. This improves bandwidth utilization, thereby avoiding a waste of bandwidth and energy.

In the solution provided in this embodiment of this application, the state duration in the LPI mode may be adjusted, and data transmission may further be performed in the refresh state in the LPI mode. In this way, a data transmission rate can be adjusted by adjusting the duration of the refresh state. For example, the data transmission rate can be increased by increasing the duration of the refresh state, and the data transmission rate can be reduced by reducing the duration of the refresh state.

Therefore, the method in this embodiment can further implement flexible adjustment of the data transmission rate. Optionally, if the first device sends the time parameter to the second device in an active state, an effective period of the time parameter is I periods that are in the LPI mode and that are after the active state, or is a J^{th} period that is in the LPI mode and that is after the active state, where I and J are integers greater than or equal to 1.

In other words, the effective period of the time parameter is the I periods that are in the LPI mode and that are after the active state, that is, various duration parameters included in the time parameter may be state duration parameters in the I periods that are in the LPI mode and that are after the active state. In this case, the first device and the second device may adjust, based on the time parameter, state duration in the I periods that are in the LPI mode and that are after the active state.

Alternatively, the effective period of the time parameter is the J^{th} period that is in the LPI mode and that is after the active state, that is, various duration parameters included in the time parameter may be state duration parameters in the J^{th} period that is in the LPI mode and that is after the active state. In this case, the first device and the second device may adjust, based on the time parameter, state duration in the J^{th} period that is in the LPI mode and that is after the active state.

Based on the method shown in FIG. 2, an embodiment of this application may further provide an Ethernet communication method. FIG. 4 is a flowchart 3 of an Ethernet communication method according to an embodiment of this application. The method shown in FIG. 4 may be another example of transmitting a time parameter, service data, and the like. As shown in FIG. 4, that the first device sends a time parameter to the second device described in S201 may include:
S401. The first device sends the time parameter to the second device in an active state.

Optionally, that the second device receives the time parameter from the first device described in S202 may include: S402. The second device receives the time parameter that is sent by the first device in the active state.

The first device may carry the time parameter in the active state by using a specific frame (for example, which is specified by a protocol). In this transmission example, the first device has a specific management module, configured to generate and transmit the specific frame; and the second device also has a corresponding management module, configured to receive the frame carrying the time parameter.

The first device sends the time parameter to the second device in the active state. If an effective period of the time parameter is I periods that are in an LPI mode and that are after the active state, state duration in the I periods that are in the LPI mode and that are after the active state is adjustable. If an effective period of the time parameter is a J^{th} period that is in the LPI mode and that is after the active state, state duration in the J^{th} period that is in the LPI mode and that is after the active state is adjustable.

In a manner, the first device sends the time parameter to the second device in the active state, and also sends at least one type of data: service data or OAM data to the second device in the active state.

In another manner, the first device sends the time parameter to the second device in the active state, and sends at least one type of data: service data or OAM data to the second device in a refresh state.

In the method provided in this embodiment, the time parameter may further be transmitted in the active state. This ensures energy saving efficiency on a basis of implementing dynamic adjustment for energy saving. In addition, data transmission is performed in the refresh state. This improves bandwidth utilization, thereby avoiding a waste of bandwidth and energy.

Based on the methods shown in FIG. 2, FIG. 3, and FIG. 4, an embodiment of this application may further provide an Ethernet communication method. Before sending the time parameter, the first device determines the time parameter based on a service attribute. The service attribute includes at least one of the following: a service rate, a service period, and a service delay requirement.

For example, if the service rate is 1 Mbps and a transmission rate in the refresh state is 10 Mbps, Tq may be set to 9 ms and Tr may be set to 1 ms.

If the service period is 200 µs, total duration, that is, Tq+Tr, may be set to 200 µs.

If the service delay requirement is 1 ms, total duration, that is, Tq+Tr, may be set to 1 ms.

Based on the methods shown in FIG. 2, FIG. 3, and FIG. 4, an embodiment of this application may further provide an Ethernet communication method. Before sending the time parameter, the first device determines the time parameter based on time parameter supporting capabilities of the first device and the second device. The time parameter supporting capability includes whether a time parameter configuration is supported. When the time parameter configuration is supported, the time parameter supporting capability further includes at least one of the following: an effective range and/or an effective value of the time parameter.

For example, the parameter supporting capabilities and effective time parameter ranges of the first device and the second device may be listed in Table 1 as follows.

**Table 1**

| Device | Effective range of a quiet state | Effective range of a refresh state | Effective range of total duration |
|---|---|---|---|
| Sending by the first device | 20-200 ms | 10-100 ms | 30-300 ms |
| Receiving by the second device | 10-100 ms | 20-200 ms | 30-300 ms |
| Sending an effective parameter by the first device to the second device | 20-100 ms | 20-100 ms | 40-200 ms |

For example, the parameter supporting capabilities of the first device and the second device are a combination of some discrete values, and may be listed in Table 2 as follows.

**Table 2**

| Device | Effective value of a quiet state | Effective value of a refresh state | Effective value of total duration |
|---|---|---|---|
| Sending by the first device | 20/40 ms | 10/20 ms | 30/40/50/60 ms |
| Receiving by the second device | 10/20/40 ms | 10/20 ms | 20/30/40/50/60 ms |
| Sending an effective parameter by the first device to the second device | 20/40 ms | 10/20 ms | 30/40/50/60 ms |

The shown time parameter supporting capabilities of the first device and the second device may be sent to a peer end at an auto-negotiation stage; or the time parameter supporting capabilities are configured in advance in a preconfiguration manner, and therefore the time parameter supporting capability of a peer end can be determined without auto-negotiation. A structure of a frame carrying the time parameter supporting capability is not limited in the patent.

For better implementation of service transmission, the first device and the second device may determine, within the effective parameter ranges based on the foregoing service attribute, time parameters to be finally used.

Because a transmission service of the first device may differ from that of the second device, a direction in which the first device transmits the time parameter to the second device and a direction in which the second device transmits the time parameter to the first device may be configured separately, to implement asymmetric rate transmission in the two directions.

An embodiment of this application may provide a communication method. Once the first device enters an LPI mode, the first device can transmit data in a refresh state, without a need to enter a wake state and an active state. This ensures energy saving efficiency, and also ensures data transmission. The first device and the second device may complete negotiation and setting of an initial parameter by using an Ethernet auto-negotiation mechanism, to implement initialization. A process under initialization may also be an active state. After the initiation starts to be performed, an LPI client (LPI Client) of the first device may send an LPI assert code by using a reconciliation sublayer (Reconciliation Sublayer, RS) of a media access control (Media Access Control, MAC) layer. After obtaining the LPI assert code, the RS layer of the first device may enter an LPI mode. The RS sublayer of the first device further sends an LPI assert message to a physical layer of the second device based on the LPI assert code by using a physical coding sublayer (Physical Coding Sublayer, PCS), where the LPI assert message may include the LPI assert code. After receiving the LPI assert message, the second device may enter an LPI mode. In this implementation, once the first device and the second device enter the LPI mode, the first device and the second device will not exit the LPI mode, that is, do not need to enter an active state. In this way, data transmission is implemented while ensuring energy saving, and repeated switching between the LPI mode and the active state is further avoided, thereby reducing a waste of resources caused by sleep time and wake time.

In this manner, after initialization, the devices at the two ends of the link, that is, the first device and the second device, keep only in a quiet state and a refresh state, and alternate the two states continuously, without a need to go through a wake state and an active state.

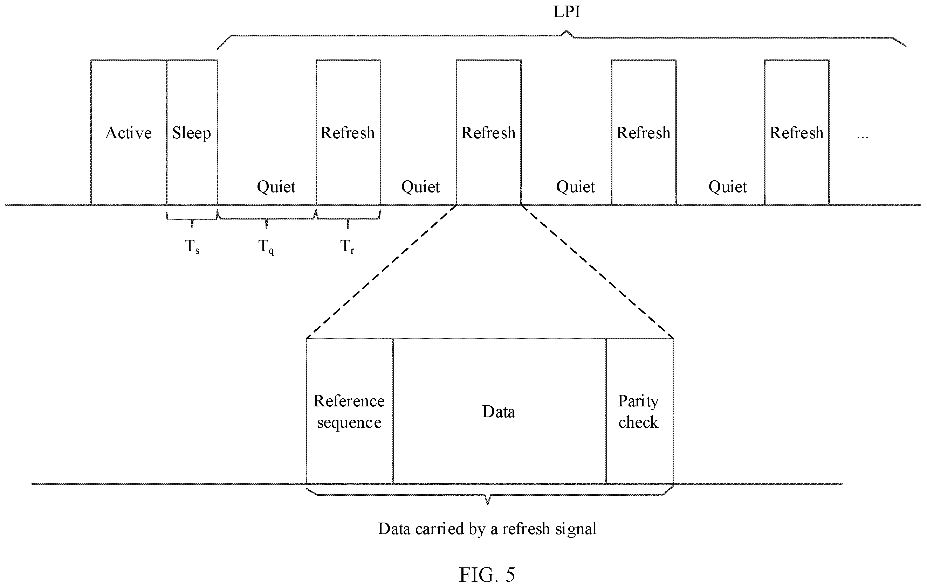

For example, FIG. 5 is a schematic diagram 1 of a device status in an Ethernet communication method according to an embodiment of this application. As shown in FIG. 5, if the first device is in an active state, when an RS layer of the first device receives an LPI assert code, the first device may enter an LPI mode by going through a sleep state. Duration of the sleep state is Tₛ. After the duration of the sleep state expires, the first device may enter a quiet state in the LPI mode. After duration T_{q} of the quiet state expires, the first device may enter a refresh state. In the refresh state, a state duration parameter in a next period of a current period in the LPI mode may be sent to the second device by using a physical coding sublayer. The current period may be a period in which a first refresh signal exists. The state duration parameter in the next period may include a duration parameter of at least one state in the next period or a parameter of total duration in the next period. The duration parameter of the at least one state may be a duration parameter of a quiet state, a duration parameter of a refresh state, or a duration parameter of a quiet state and a duration parameter of a refresh state. The parameter of the total duration in the next period may be a parameter of total duration of the quiet state and the refresh state in the next period.

The first device further adjusts state duration in the next period based on the state duration parameter in the next period. After receiving the state duration parameter in the next period, the second device may also adjust the state duration in the next period based on the state duration parameter in the next period.

The first device may further send at least one type of data: service data or OAM data to the second device in the refresh state in the next period.

The first device may send a time parameter to the second device by using the refresh signal in the refresh state in the current period, and send the at least one type of data to the second device by using a refresh signal in the refresh state in the next period.

Regardless of transmission of the time parameter or the at least one type of data, the refresh signal may include at least: a reference sequence (Reference Sequence) field, a data (Data) field, and a parity check (Parity Check) field that are shown in FIG. 5. The first device may transmit the time parameter to the second device by adding the time parameter to a data field of the refresh signal in the refresh state in the current period. The first device may transmit the at least one type of data to the second device by adding the at least one type of data to a data field of the refresh signal in the refresh state in the next period.

It should be noted that the first device may alternatively transmit the at least one type of data to the second device in a refresh state in any period, which is not limited to the next period, following the current period. The foregoing description is merely used as an example, and this embodiment of this application is not limited thereto.

The first device and the second device may adjust the state duration of the LPI based on the time parameter. Therefore, dynamic adjustment of a data transmission rate is further implemented by performing data transmission in the refresh state in the LPI mode. For example, the data transmission rate can be increased by increasing duration of the refresh state, and the data transmission rate can be reduced by reducing the duration of the refresh state.

In FIG. 5, duration of the quiet state and duration of the refresh state may be adjusted separately; or may be adjusted associatively, that is, duration of a state may be adjusted, so that duration of another state is also adjusted.

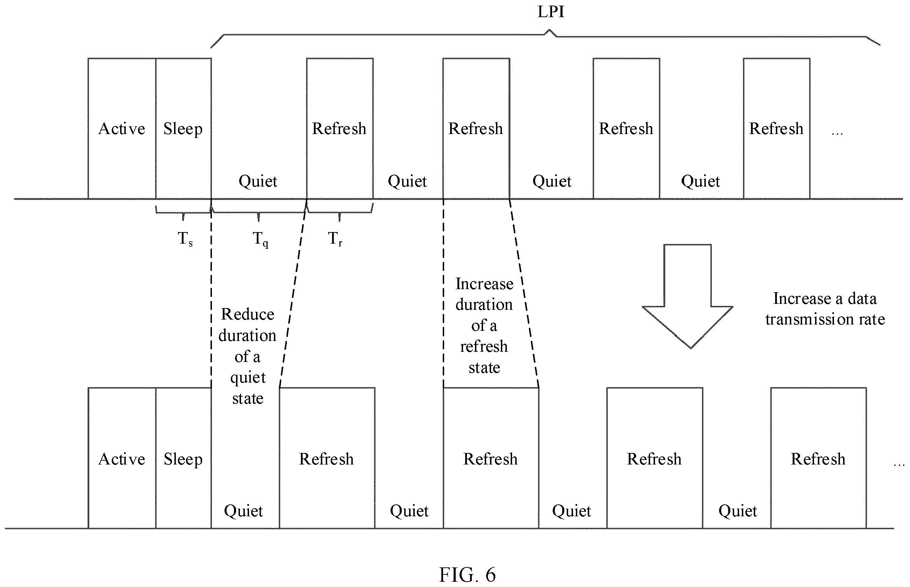

FIG. 6 is a schematic diagram 2 of a device status in an Ethernet communication method according to an embodiment of this application. As shown in FIG. 6, the first device and the second device may reduce duration of a quiet state based on a duration parameter of the quiet state in a time parameter. This increases duration of a refresh state, thereby increasing a data transmission rate. For example, a duration of a quiet state in a next period may be 1/2 of duration of a quiet state in a current period, and therefore the duration of the quiet state can be reduced. The first device and the second device may further increase duration of a refresh state based on a duration parameter of the refresh state in the time parameter, thereby increasing the data transmission rate. For example, duration of a refresh state in the next period may be three times as long as duration of a refresh state in the current period, and therefore the duration of the refresh state can be increased.

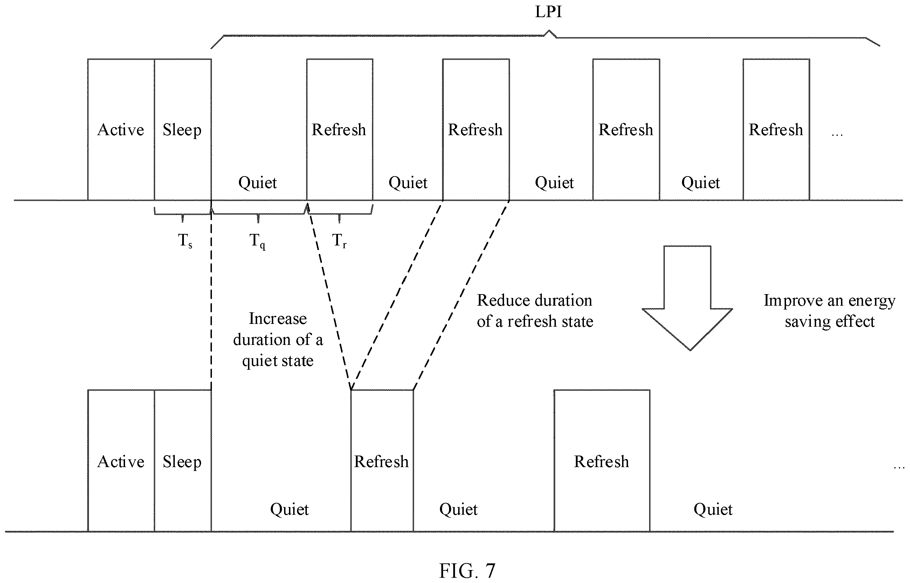

FIG. 7 is a schematic diagram 3 of a device status in an Ethernet communication method according to an embodiment of this application. As shown in FIG. 7, the first device and the second device may increase duration of a quiet state based on a duration parameter of the quiet state in a time parameter, thereby improving an energy saving effect. For example, duration of a quiet state in a next period may be twice as long as duration of a quiet state in a current period, and therefore the duration of the quiet state can be increased. The first device and the second device may further reduce duration of a refresh state based on a duration parameter of the refresh state in the time parameter, thereby improving the energy saving effect. For example, a duration of a refresh state in the next period may be 1/2 of duration of a refresh state in the current period, and therefore the duration of the refresh state can be reduced.

In the foregoing methods, after the devices enter the LPI mode, the devices will not exit the LPI mode, that is, do not need to enter an active state by going through a wake state. Therefore, control overheads for the wake state and the active state are avoided, and an energy saving effect is effectively improved. In addition, the at least one type of data may be transmitted in the refresh state. Therefore, the data transmission rate may be adjusted by adjusting a proportion of the duration of the quiet state to the duration of the refresh state, to implement flexible adjustment of a transmission rate of the link. Moreover, because the devices at the two ends of the link may adjust respective state duration of the LPI, asymmetric rate transmission is implemented in two directions.

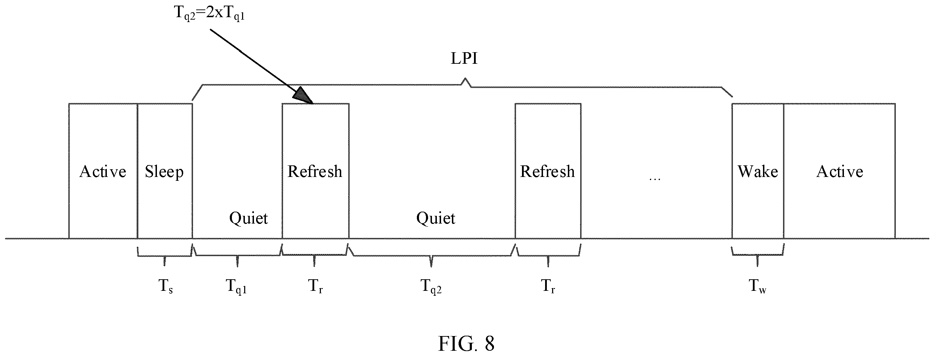

An embodiment of this application may further provide a communication method. When data of a first device is to be transmitted at a MAC layer, an LPI client of the first device sends an LPI de-asset code to a PCS by using an RS, so that the first device exits an LPI mode and enters an active state by going through a wake state. After entering the active state, both of transmit and receive end devices can perform data transmission. FIG. 8 is a schematic diagram 4 of a device status in an Ethernet communication method according to an embodiment of this application. As shown in FIG. 8, if the first device is in an active state, when the RS layer of the first device receives an LPI assert code, the first device may enter an LPI mode by going through a sleep state. Duration of the sleep state is Tₛ. After the duration of the sleep state expires, the first device may enter a quiet state in the LPI mode. After duration T_{q1} of the quiet state expires, the first device may enter a refresh state. In the refresh state, a state duration parameter in a next period of a current period in the LPI mode may be sent to a second device by using a physical coding sublayer. The current period may be a period in which a first refresh signal exists. The state duration parameter in the next period may include a duration of a quiet state in the next period, that is, T_{q2} shown in FIG. 8. The duration T_{q2} of the quiet state in the next period may be, for example, twice as long as the duration T_{q1} of the quiet state in the current period, that is, T_{q2} = 2 × T_{q1}.

The first device further adjusts the duration of the quiet state in the next period based on a duration parameter of the quiet state in the next period. After receiving the state duration parameter in the next period, the second device may also adjust the duration of the quiet state in the next period based on the duration parameter of the quiet state in the next period.

The first device and the second device may separately adjust, based on the state duration parameter in the next period, the duration of the quiet state in the next period to be twice as long as the duration of the quiet state in the current period. This prolongs the duration of the quiet state, thereby improving an energy saving effect. Using a similar method: The duration of the quiet state in the next period may be 1/2 of the duration T_{q1} of the quiet state in the current period, and therefore the duration of the quiet state can be reduced.

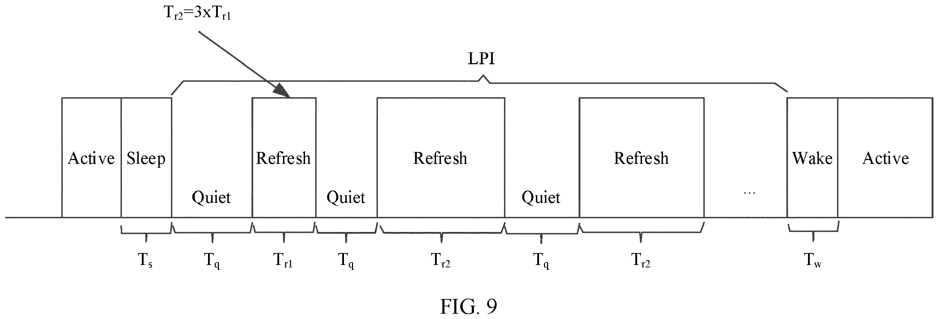

FIG. 9 is a schematic diagram 5 of a device status in an Ethernet communication method according to an embodiment of this application. As shown in FIG. 9, if a first device is in an active state, when an RS layer of the first device receives an LPI assert code, the first device may enter an LPI mode by going through a sleep state. Duration of the sleep state is Tₛ. After the duration of the sleep state expires, the first device may enter a quiet state in the LPI mode. After duration T_{q} of the quiet state expires, the first device may enter a refresh state. In the refresh state, a state duration parameter in a next period of a current period in the LPI mode may be sent to a second device by using a physical coding sublayer. The current period may be a period in which a first refresh signal exists. The state duration parameter in the next period may include a duration of a refresh state in the next period, namely, Tᵣ₂ shown in FIG. 9. The duration Tᵣ₂ of the refresh state in the next period may be, for example, three times as long as duration Tᵣ₁ of the refresh state in the current period, that is, Tᵣ₂ = 3 × Tᵣ₁.

The first device further adjusts the duration of the refresh state in the next period based on a duration parameter of the refresh state in the next period. After receiving the state duration parameter in the next period, the second device may also adjust the duration of the refresh state in the next period based on the duration parameter of the refresh state in the next period.

The first device and the second device may separately adjust, based on the state duration parameter in the next period, the duration of the refresh state in the next period to be three times as long as the duration of the refresh state in the current period. This prolongs the duration of the refresh state, so that a larger amount of data is transmitted, and a data transmission rate is increased. Using a similar method: The duration of the refresh state in the next period may be 1/2 of the duration Tᵣ₁ of the refresh state in the current period, and therefore the duration of the refresh state can be reduced.

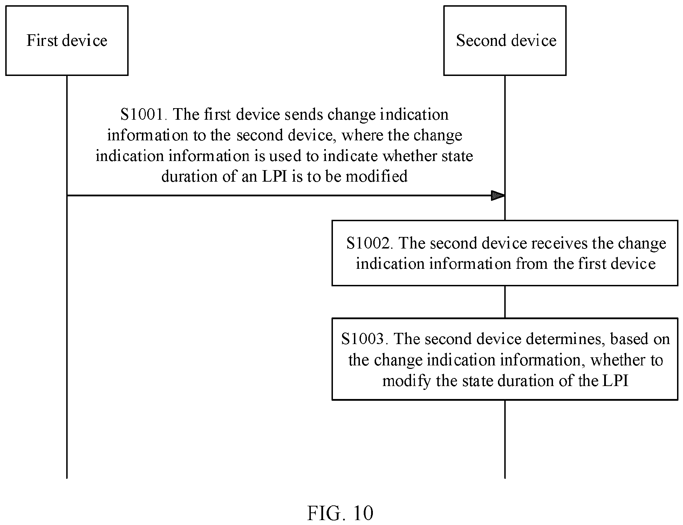

Optionally, based on any one of the foregoing Ethernet communication methods, an embodiment of this application further provides a communication method. FIG. 10 is a flowchart 4 of an Ethernet communication method according to an embodiment of this application. As shown in FIG. 10, based on any one of the methods in FIG. 2 to FIG. 4, the method may further include the following steps.

S1001. The first device sends change indication (Change Indication) information to the second device, where the change indication information is used to indicate whether the state duration of the LPI is to be modified.

Different assignments of a field in which the change indication information is located may be used to indicate whether the state duration of the LPI is to be modified, and the assignments may be represented as first indication information and second indication information. The first indication information may be used to indicate that the state duration of the LPI needs to be modified, that is, the state duration of the LPI is to be modified. The second indication information may be used to indicate that the state duration of the LPI does not need to be modified, that is, the state duration of the LPI is not to be modified.

If the change indication information indicates that the state duration of the LPI is to be modified, the first device may send the change indication information and the time parameter to the second device in a refresh state or an active state; or the first device may send the change indication information to the second device in one of a refresh state or an active state, and send the time parameter to the second device in the other state.

If the change indication information indicates that the state duration of the LPI is not to be modified, the first device may not need to send the time parameter to the second device; in other words, the first device sends only the change indication information to the second device. Alternatively, the first device may send the change indication information and the time parameter to the second device. However, when determining, based on the change indication information, not to modify the state duration of the LPI, the second device does not need to perform subsequent parsing processing. S1002. The second device receives the change indication information from the first device.

S1003. The second device determines, based on the change indication information, whether to modify the state duration of the LPI.

If the change indication information is the first indication information, the second device may determine, based on the change indication information, to modify the state duration of the LPI. If the change indication information is the second indication information, the second device may determine, based on the change indication information, not to modify the state duration of the LPI.

If determining to modify the state duration of the LPI, the second device may adjust the state duration in the LPI mode based on the time parameter. If determining not to modify the state duration of the LPI, the second device does not need to parse fields of the time parameter.

If none of the duration of the quiet state, the duration of the refresh state, or the total duration of the quiet state and the refresh state in the LPI mode need to be modified, the first device may not need to transmit the fields of the time parameter; or the fields of the time parameter are empty, that is, do not include duration of various duration parameters. If any one of the duration of the quiet state, the duration of the refresh state, or the total duration of the quiet state and the refresh state in the LPI mode needs to be modified, the fields of the time parameter that includes various duration parameters need to follow the field in which the change indication information is located. For example, in the fields of the time parameter, a duration field of the quiet state may be represented as quiet period duration (Quiet Period Duration), and a duration field of a quiet state in a next period may be represented as next quiet period duration (Next Quiet Period Duration). In the fields of time parameter, a duration field of the refresh state may be represented as refresh period duration (Refresh Period Duration), and a duration field of a refresh state in the next period may be represented as next refresh period duration (Next Refresh Period Duration).

The field in which the change indication information is located may include at least one bit.

If the field in which the change indication information is located includes one bit, a value 1 of the bit may be used to indicate that the state duration of the LPI is to be modified, and a value 0 of the bit may be used to indicate that the state duration of the LPI is not to be modified. Alternatively, a value 0 of the bit may be used to indicate that the state duration of the LPI is to be modified, and a value 1 of the bit may be used to indicate that the state duration of the LPI is not to be modified.

If the field in which the change indication information is located includes a plurality of bits, a value of each bit may be used to indicate whether each type of duration corresponding to the bit is to be modified. A value 1 of a bit may be used to indicate that each type of duration corresponding to the bit is to be modified, and a value 0 of a bit may be used to indicate that each type of duration corresponding to the bit is not to be modified. Alternatively, a value 0 of a bit may be used to indicate that each type of duration corresponding to the bit is to be modified, and a value 1 of a bit may be used to indicate that each type of duration corresponding to the bit is not to be modified.

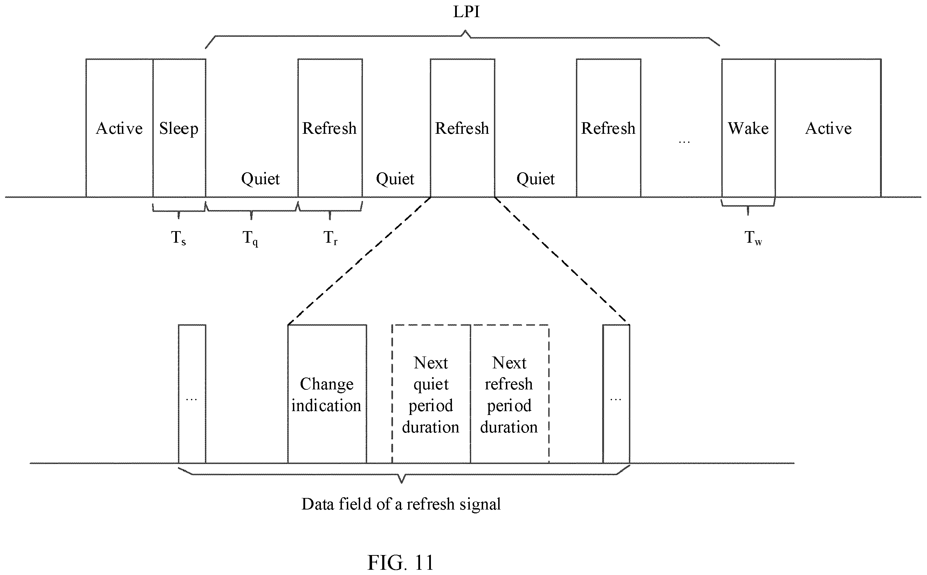

The following provides descriptions by using examples. FIG. 11 is a schematic diagram 1 of a device status in an Ethernet communication method and a frame structure according to an embodiment of this application. The first device may send a refresh signal to the second device in a refresh state in an LPI mode, where the refresh signal may include change indication information and a time parameter. The change indication information may be located in a change indication field in a data field of the refresh signal. The time parameter may be a duration parameter in a next period of a current period, for example, next quiet period duration, next refresh period duration, or next quiet period duration and next refresh period duration. The next quiet period duration may be located in a next quiet period duration field in the data field of the refresh signal, and the next refresh period duration may be located in a next refresh period duration field in the data field of the refresh signal.

The change indication field may include, for example, one bit.

If a value of the change indication field is used to indicate that the next quiet period duration is to be modified, the data field of the refresh signal may not include the next refresh period duration field. In other words, the data field of the refresh signal may include the change indication field and the next quiet period duration field.

If a value of the change indication field is used to indicate that the next refresh period duration is to be modified, the data field of the refresh signal may not include the next quiet period duration field. In other words, the data field of the refresh signal may include the change indication field and the next refresh period duration field.

If a value of the change indication field is used to indicate that the next quiet period duration and the next refresh period duration are to be modified, the data field of the refresh signal may include the change indication field, the next quiet period duration field, and the next refresh period duration field.

If a value of the change indication field is used to indicate that the next quiet period duration and the next refresh period duration are not to be modified, the data field of the refresh signal may not include the next quiet period duration field and the next refresh period duration field. In other words, the data field of the refresh signal may include the change indication field.

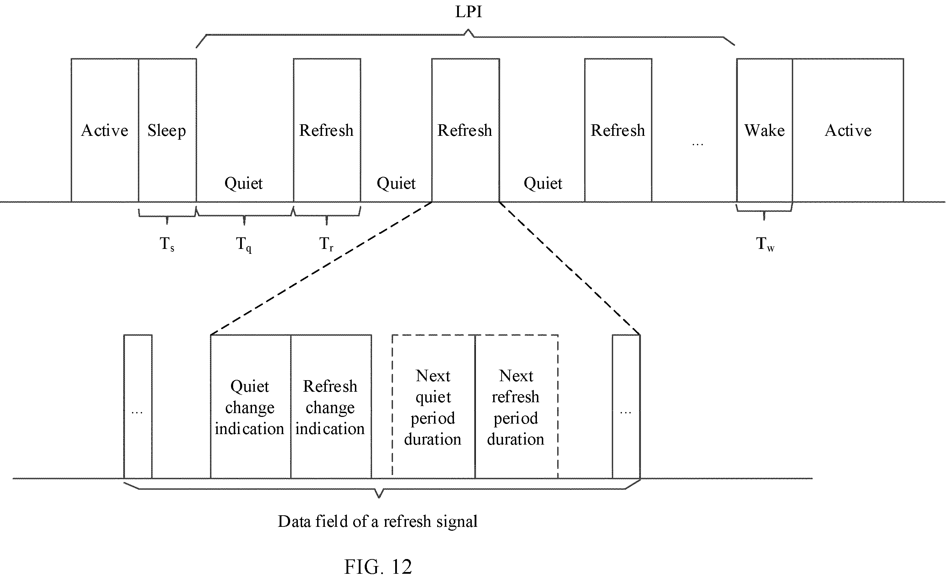

FIG. 12 is a schematic diagram 2 of a device status in an Ethernet communication method and a frame structure according to an embodiment of this application. As shown in FIG. 12, the first device may send a refresh signal to the second device in a refresh state in an LPI mode, where the refresh signal may include change indication information and a time parameter. The change indication information may include quiet-state change indication information and refresh-state change indication information. The quiet-state change indication information may be located in a quiet change indication (Quiet Change Indication) field in a data field of the refresh signal, and the refresh-state change indication information may be located in a refresh change indication (Refresh Change Indication) field in the data field of the refresh signal. The time parameter may be a duration parameter in a next period of a current period, for example, next quiet period duration, next refresh period duration, or next quiet period duration and next refresh period duration. The next quiet period duration may be located in a next quiet period duration field in the data field of the refresh signal, and the next refresh period duration may be located in a next refresh period duration field in the data field of the refresh signal.

The change indication field may include, for example, two bits, where the quiet change indication field occupies one bit, and the refresh change indication field occupies one bit.

If a value of the quiet change indication field is used to indicate that the next quiet period duration is to be modified, and a value of the refresh change indication field is used to indicate that the next refresh period duration is not to be modified, the data field of the refresh signal may not include the next refresh period duration field. In other words, the data field of the refresh signal may include the quiet change indication field, the refresh change indication field, and the next quiet period duration field.

If a value of the quiet change indication field is used to indicate that the next quiet period duration is not to be modified, and a value of the refresh change indication field is used to indicate that the next refresh period duration is to be modified, the data field of the refresh signal may not include the next quiet period duration field. In other words, the data field of the refresh signal may include the quiet change indication field, the refresh change indication field, and the next refresh period duration field.

If a value of the quiet change indication field is used to indicate that the next quiet period duration is to be modified, and a value of the refresh change indication field is used to indicate that the next refresh period duration is to be modified, the data field of the refresh signal may include the quiet change indication field, the refresh change indication field, the next quiet period duration field, and the next refresh period duration field.

If a value of the quiet change indication field is used to indicate that the next quiet period duration is not to be modified, and a value of the refresh change indication field is used to indicate that the next refresh period duration is not to be modified, the data field of the refresh signal may not include the next quiet period duration field and the next refresh period duration field. In other words, the data field of the refresh signal may include the quiet change indication field and the refresh change indication field.

In the method provided in this embodiment, the change indication information may be used to indicate whether state duration in the LPI mode is to be modified. In this way, when state duration is not to be modified, unnecessary parsing by the device sides can be avoided, thereby reducing device power consumption.

Optionally, based on the Ethernet communication method described in any one of the foregoing embodiments, an embodiment of this application may further provide an Ethernet communication method. Before that the first device sends a time parameter to the second device described in S201, the method may further include:
the first device determines the time parameter based on a service attribute, where the service attribute
includes at least one of the following: a service rate, a service period, and a service delay requirement. In the method, the state duration in the LPI mode may be adjusted by using the time parameter determined based on the service attribute, so that energy saving of the devices is associated with the service attribute. In this way, dynamic adjustment for energy saving can be implemented while ensuring a service transmission, and a data transmission rate can be flexibly adjusted based on the service attribute.

An embodiment of this application may further provide an Ethernet communications apparatus. The Ethernet communications apparatus may have any function of the first device in any one of the methods in FIG. 2 to FIG. 12.

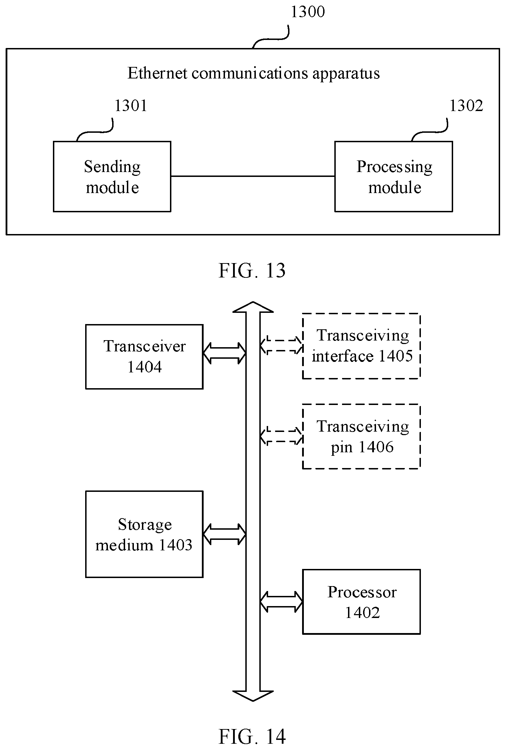

FIG. 13 is a schematic structural diagram 1 of an Ethernet communications apparatus according to an embodiment of this application. As shown in FIG. 13, the Ethernet communications apparatus 1300 may include:
a sending module 1301, configured to send a time parameter to a second device, where the time parameter includes a parameter of at least one of the following duration: duration of a quiet state, duration of a refresh state, or total duration, and the total duration is total duration of the quiet state and the refresh state; and
a processing module 1302, configured to adjust state duration in an LPI mode based on the time parameter.

It should be understood that the Ethernet communications apparatus 1300 has any function of the first device in any one of the methods in FIG. 2 to FIG. 12. For the any function, refer to the any one of the methods in FIG. 2 to FIG. 12. Details are not described herein again.

The Ethernet communications apparatus provided in this embodiment of this application may be implemented by using a plurality of product forms. For example, the Ethernet communications apparatus may be configured as a general processing system. For example, the Ethernet communications apparatus may be implemented by a general bus architecture. For example, the Ethernet communications apparatus may be implemented by an ASIC (application-specific integrated circuit). The following provides several possible product forms of the Ethernet communications apparatus in this embodiment of this application. It should be understood that the following descriptions are merely used as examples, and possible product forms in this embodiment of this application are not limited thereto.

FIG. 14 is a structural diagram 1 of possible product forms of an Ethernet communications apparatus according to an embodiment of this application.

As a possible product form, the Ethernet communications apparatus may be implemented by an Ethernet device. The Ethernet communications apparatus includes a processor 1402 and a transceiver 1404. Optionally, the Ethernet communications apparatus may further include a storage medium 1403.

As another possible product form, the Ethernet communications apparatus may be implemented by a general purpose processor, which is commonly known as a chip. The general purpose processor includes a processor 1402 and a transceiving interface 1405 or a transceiving pin 1406. Optionally, the general purpose processor may further include a storage medium 1403.

As another possible product form, the Ethernet communications apparatus may be implemented by using the following: one or more field-programmable gate arrays (Field-Programmable Gate Array, FPGA), a programmable logic device (Programmable Logic Device, PLD), a controller, a state machine, a logic gate, a discrete hardware component, any other proper circuit, or any combination of circuits that can perform various functions described in this application. In the product forms, the storage medium 1403 is configured to store a program instruction, and the processor 1402 is configured to invoke the program instruction stored in the storage medium 1403, to perform any one of the Ethernet communication methods performed by the first device in FIG. 2 to FIG. 12.

Optionally, an embodiment of this application further provides a computer-readable storage medium. The computer-readable storage medium may include an instruction; and when the instruction is run on a computer, the computer is enabled to perform any one of the Ethernet communication methods performed by the first device in FIG. 2 to FIG. 12 in the foregoing embodiments.

Optionally, an embodiment of this application further provides a computer program product including an instruction. When the computer program product is run on a computer, the computer is enabled to perform any one of the Ethernet communication methods performed by the first device in FIG. 2 to FIG. 12 in the foregoing embodiments.

Various functions of the computer program product may be implemented by hardware or software. When the functions are implemented by software, these functions may be stored in a computer-readable medium, or may be transmitted as one or more instructions or one or more pieces of code in a computer-readable storage medium.

The Ethernet communications apparatus, the computer-readable storage medium, and the computer program product that are in the embodiments of this application can perform any one of the Ethernet communication methods performed by the first device in FIG. 2 to FIG. 12. For specific implementation processes and beneficial effects thereof, refer to the foregoing descriptions. Details are not described herein again.

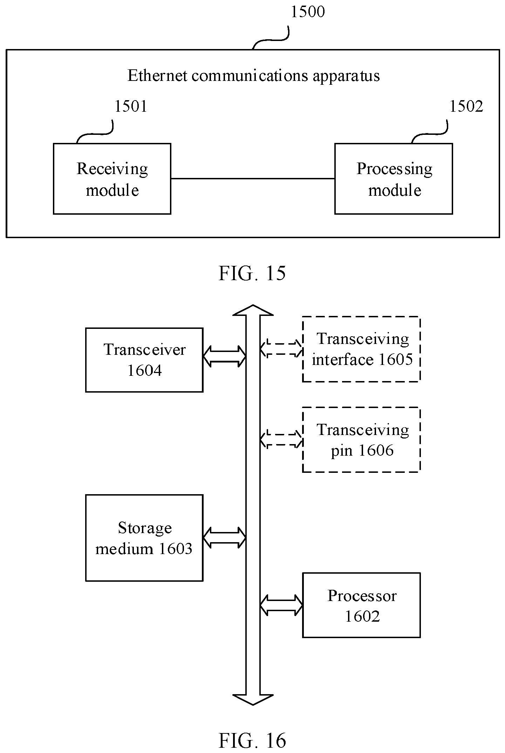

An embodiment of this application may further provide an Ethernet communications apparatus. The Ethernet communications apparatus may have any function of the second device in any one of the methods in FIG. 2 to FIG. 12. FIG. 15 is a schematic structural diagram 2 of an Ethernet communications apparatus according to an embodiment of this application. As shown in FIG. 15, the Ethernet communications apparatus 1500 may include:
a receiving module 1501, configured to receive a time parameter sent by a first device, where the time parameter includes a parameter of at least one of the following duration: duration of a quiet state, duration of a refresh state, or total duration, and the total duration is total duration of the quiet state and the refresh state; and
a processing module 1502, configured to adjust state duration in an LPI mode based on the time parameter.

It should be understood that the Ethernet communications apparatus 1500 has any function of the second device in any one of the methods in FIG. 2 to FIG. 12. For the any function, refer to the any one of the methods in FIG. 2 to FIG. 12. Details are not described herein again.

The Ethernet communications apparatus provided in this embodiment of this application may be implemented by using a plurality of product forms. For example, the Ethernet communications apparatus may be configured as a general processing system. For example, the Ethernet communications apparatus may be implemented by a general bus architecture. For example, the Ethernet communications apparatus may be implemented by an ASIC (application-specific integrated circuit). The following provides several possible product forms of the Ethernet communications apparatus in this embodiment of this application. It should be understood that the following descriptions are merely used as examples, and possible product forms in this embodiment of this application are not limited thereto.

FIG. 16 is a structural diagram 2 of possible product forms of an Ethernet communications apparatus according to an embodiment of this application.

As a possible product form, the Ethernet communications apparatus may be implemented by an Ethernet device. The Ethernet communications apparatus includes a processor 1602 and a transceiver 1604. Optionally, the Ethernet communications apparatus may further include a storage medium 1603.

As another possible product form, the Ethernet communications apparatus may be implemented by a general purpose processor, which is commonly known as a chip. The general purpose processor includes a processor 1602 and a transceiving interface 1605 or a transceiving pin 1606. Optionally, the general purpose processor may further include a storage medium 1603.

As another possible product form, the Ethernet communications apparatus may be implemented by using the following: one or more FPGAs, a PLD, a controller, a state machine, a logic gate, a discrete hardware component, any other proper circuit, or any combination of circuits that can perform various functions described in this application.

In the product forms, the storage medium 1603 is configured to store a program instruction, and the processor 1602 is configured to invoke the program instruction stored in the storage medium 1603, to perform any one of the Ethernet communication methods performed by the second device in FIG. 2 to FIG. 12.

Optionally, an embodiment of this application further provides a computer-readable storage medium. The computer-readable storage medium may include an instruction; and when the instruction is run on a computer, the computer is enabled to perform any one of the Ethernet communication methods performed by the second device in FIG. 2 to FIG. 12 in the foregoing embodiments.

Optionally, an embodiment of this application further provides a computer program product including an instruction. When the computer program product is run on a computer, the computer is enabled to perform any one of the Ethernet communication methods performed by the second device in FIG. 2 to FIG. 12 in the foregoing embodiments. Various functions of the computer program product may be implemented by hardware or software. When the functions are implemented by software, these functions may be stored in a computer-readable medium, or may be transmitted as one or more instructions or one or more pieces of code in a computer-readable storage medium.

The Ethernet communications apparatus, the computer-readable storage medium, and the computer program product that are in the embodiments of this application can perform any one of the Ethernet communication methods performed by the second device in FIG. 2 to FIG. 12. For specific implementation processes and beneficial effects thereof, refer to the foregoing descriptions. Details are not described herein again.

An embodiment of this application may further provide a network system. The network system may include a first device and a second device. The first device and the second device may be connected through an Ethernet. The first device may be any Ethernet communications apparatus in FIG. 13 or FIG. 15, to perform any one of the Ethernet communication methods performed by the first device in FIG. 2 to FIG. 12. For a specific implementation, reference is made to the foregoing descriptions, and details are not described herein again. The second device may be any Ethernet communications apparatus in FIG. 14 or FIG. 16, to perform any one of the Ethernet communication methods performed by the second device in FIG. 2 to FIG. 12. For a specific implementation, reference is made to the foregoing descriptions, and details are not described herein again.

The system can implement the Ethernet communication method performed by the first device and the second device in any one of the foregoing embodiments. For specific implementation processes and beneficial effects thereof, refer to the foregoing descriptions. Details are not described herein again.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of this application, "B corresponding to A" indicates that B is associated with A, and B may be determined according to A. However, it should further be understood that determining A according to B does not mean that B is determined according to A only; that is, B may also be determined according to A and/or other information.

In this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists, where A and B may be singular or plural. The character "/" generally indicates an "or" relationship between the associated objects. "The following at least one (item)" or a similar expression thereof means any combination of these items, including a singular (item) or any combination of a plural (items). For example, at least one (item) of a, b, and c may represent a, b, c, a-b, a-c, b-c, or a-b-c, where a, b, and/or c may be in a singular or plural form.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware or a combination thereof. When this application is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. A disk (Disk) and disc (disc) used by this application includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

## Claims

1. An Ethernet communication method, comprising:
sending (S301), by a first device, a time parameter to a second device, wherein the time parameter comprises a parameter of at least one of the following duration: duration of a quiet state, duration of a refresh state, or total duration, and the total duration is total duration of the quiet state and the refresh state; and
adjusting, by the first device, state duration in a low power idle, LPI mode of Energy-Efficient Ethernet, based on the time parameter,
wherein the sending (S301), by a first device, a time parameter to a second device comprises:
either
sending, by the first device, the time parameter to the second device in a refresh state in the LPI mode;
wherein the LPI mode comprises at least one period, and a quiet state and a refresh state exist in each period; and
an effective period of the time parameter is a current period, a next period of the current period, N periods following the current period, or an M^{th} period following the current period in the LPI mode,
wherein N and M are integers greater than or equal to 2,
or
sending, by the first device, the time parameter to the second device in an active state;
wherein the LPI mode comprises at least one period, and a quiet state and a refresh state exist in each period; and
an effective period of the time parameter is I periods that are in the LPI mode and that are after the active state, or is a J^{th} period that is in the LPI mode and that is after the active state,
wherein I and J are integers greater than or equal to 1.

2. The method according to claim 1, wherein the method further comprises:
sending (S303), by the first device, at least one type of data: service data or operations, administration and maintenance OAM data to the second device in the refresh state in the LPI mode.

3. The method according to any one of claims 1 or 2, wherein the method further comprises:
sending (S303), by the first device, change indication information to the second device, wherein the change indication information is used to indicate whether the state duration of the LPI is to be modified.

4. An Ethernet communication method, comprising:
receiving (S302), by a second device, a time parameter sent by a first device, wherein the time parameter comprises a parameter of at least one of the following duration: duration of a quiet state, duration of a refresh state, or total duration, and the total duration is total duration of the quiet state and the refresh state; and
adjusting, by the second device, state duration in a low power idle, LPI, mode of Energy-Efficient Ethernet, based on the time parameter,
wherein the receiving (S302), by a second device, a time parameter sent by a first device comprises:
either
receiving, by the second device, the time parameter that is sent by the first device in a refresh state in the LPI mode;
wherein the LPI mode comprises at least one period, and a quiet state and a refresh state exist in each period; and
an effective period of the time parameter is a current period, a next period of the current period, N periods following the current period, or an M^{th} period following the current period in the LPI mode, wherein
N and M are integers greater than or equal to 2,
or
receiving, by the second device, the time parameter that is sent by the first device in an active state;
wherein the LPI mode comprises at least one period, and a quiet state and a refresh state exist in each period; and
an effective period of the time parameter is I periods that are in the LPI mode and that are after the active state, or is a J^{th} period that is in the LPI mode and that is after the active state, wherein
I and J are integers greater than or equal to 1.

5. The method according to claim 4, wherein the method further comprises:
receiving, the second device, at least one type of data: service data or operations, administration and maintenance OAM data that is sent by the first device to the second device in the refresh state in the LPI mode.

6. The method according to any one of claims 4 or 5, wherein the method further comprises:
receiving, by the second device, change indication information sent by the first device; and
determining, by the second device, based on the change indication information, whether to modify the state duration of the LPI.

7. An apparatus, comprising means adapted to execute the method according to any one of claims 1 to 3 or claims 4 to 6.

8. A computer-readable storage medium, comprising instructions, which when executed by a computer, cause the computer to carry out all the steps of the method according to any one of claims 1 to 3 or claims 4 to 6.

9. A computer program comprising instruction which, when the program is executed by an electronic device, cause the electronic device to carry out all the steps of the method according to any one of claims 1 to 3 or claims 4 to 6.

## Patentansprüche

1. Ethernet-Kommunikationsverfahren, welches umfasst:
Senden (S301), durch eine erste Vorrichtung, eines Zeitparameters an eine zweite Vorrichtung, wobei der Zeitparameter einen Parameter wenigstens einer der folgenden Dauern umfasst: Dauer eines "Quiet"-Zustands, Dauer eines "Refresh"-Zustands oder Gesamtdauer, und wobei die Gesamtdauer die Gesamtdauer des "Quiet"-Zustands und des "Refresh"-Zustands ist; und
Anpassen, durch die erste Vorrichtung, der Zustandsdauer in einem "Low Power Idle", LPI, -Modus eines "Energy-Efficient Ethernet" basierend auf dem Zeitparameter, wobei das Senden (S301), durch eine erste Vorrichtung, eines Zeitparameters an eine zweite Vorrichtung umfasst:
entweder
Senden, durch die erste Vorrichtung, des Zeitparameters an die zweite Vorrichtung in einem "Refresh"-Zustand im LPI-Modus;
wobei der LPI-Modus wenigstens eine Periode umfasst und ein "Quiet"-Zustand und ein "Refresh"-Zustand in jeder Periode existieren; und
eine effektive Periode des Zeitparameters eine aktuelle Periode, eine nächste Periode nach der aktuellen Periode, N auf die aktuelle Periode folgende Perioden oder eine auf die aktuelle Periode folgende M-te Periode im LPI-Modus ist,
wobei N und M ganze Zahlen größer oder gleich 2 sind,
oder
Senden, durch die erste Vorrichtung, des Zeitparameters an die zweite Vorrichtung in einem aktiven Zustand;
wobei der LPI-Modus wenigstens eine Periode umfasst und ein "Quiet"-Zustand und ein "Refresh"-Zustand in jeder Periode existieren; und
eine effektive Periode des Zeitparameters I Perioden ist, welche im LPI-Modus sind und welche nach dem aktiven Zustand liegen, oder eine J-te Periode ist, welche im LPI-Modus ist und welche nach dem aktiven Zustand liegt,
wobei I und J ganze Zahlen größer oder gleich 1 sind.

2. Verfahren nach Anspruch 1, wobei das Verfahren ferner umfasst:
Senden (S303), durch die erste Vorrichtung, wenigstens eines Datentyps: Servicedaten oder "Operations, Administration and Maintenance", OAM, -Daten, an die zweite Vorrichtung im "Refresh"-Zustand im LPI-Modus.

3. Verfahren nach einem der Ansprüche 1 oder 2, wobei das Verfahren ferner umfasst:
Senden (S303), durch die erste Vorrichtung, von Änderungsanzeige-Informationen an die zweite Vorrichtung, wobei die Änderungsanzeige-Informationen verwendet werden, um anzuzeigen, ob die Zustandsdauer des LPI zu ändern ist.

4. Ethernet-Kommunikationsverfahren, welches umfasst:
Empfangen (S302), durch eine zweite Vorrichtung, eines von einer ersten Vorrichtung gesendeten Zeitparameters, wobei der Zeitparameter einen Parameter wenigstens einer der folgenden Dauern umfasst: Dauer eines "Quiet"-Zustands, Dauer eines "Refresh"-Zustands oder Gesamtdauer, und wobei die Gesamtdauer die Gesamtdauer des "Quiet"-Zustands und des "Refresh"-Zustands ist; und
Anpassen, durch die zweite Vorrichtung, der Zustandsdauer in einem "Low Power Idle", LPI, -Modus eines "Energy-Efficient Ethernet" basierend auf dem Zeitparameter,
wobei das Empfangen (S302), durch eine zweite Vorrichtung, eines von einer ersten Vorrichtung gesendeten Zeitparameters umfasst:
entweder
Empfangen, durch die zweite Vorrichtung, des Zeitparameters, welcher von der ersten Vorrichtung in einem "Refresh"-Zustand im LPI-Modus gesendet wird;
wobei der LPI-Modus wenigstens eine Periode umfasst und ein "Quiet"-Zustand und ein "Refresh"-Zustand in jeder Periode existieren; und
eine effektive Periode des Zeitparameters eine aktuelle Periode, eine nächste Periode nach der aktuellen Periode, N auf die aktuelle Periode folgende Perioden oder eine auf die aktuelle Periode folgende M-te Periode im LPI-Modus ist, wobei N und M ganze Zahlen größer oder gleich 2 sind,
oder
Empfangen, durch die zweite Vorrichtung, des Zeitparameters, welcher von der ersten Vorrichtung in einem aktiven Zustand gesendet wird;
wobei der LPI-Modus wenigstens eine Periode umfasst und ein "Quiet"-Zustand und ein "Refresh"-Zustand in jeder Periode existieren; und
eine effektive Periode des Zeitparameters I Perioden ist, welche im LPI-Modus sind und welche nach dem aktiven Zustand liegen, oder eine J-te Periode ist, welche im LPI-Modus ist und welche nach dem aktiven Zustand liegt, wobei I und J ganze Zahlen größer oder gleich 1 sind.

5. Verfahren nach Anspruch 4, wobei das Verfahren ferner umfasst:
Empfangen, durch die zweite Vorrichtung, wenigstens eines Datentyps: Servicedaten oder "Operations, Administration and Maintenance", OAM, -Daten, welcher von der ersten Vorrichtung an die zweite Vorrichtung im "Refresh"-Zustand im LPI-Modus gesendet wird.

6. Verfahren nach einem der Ansprüche 4 oder 5, wobei das Verfahren ferner umfasst:
Empfangen, durch die zweite Vorrichtung, von Änderungsanzeige-Informationen, die von der ersten Vorrichtung gesendet wurden; und
Bestimmen, durch die zweite Vorrichtung basierend auf den Änderungsanzeige-Informationen, ob die Zustandsdauer des LPI zu ändern ist.

7. Einrichtung, welche Mittel umfasst, die dazu eingerichtet sind, das Verfahren nach einem der Ansprüche 1 bis 3 oder 4 bis 6 auszuführen.

8. Computerlesbares Speichermedium, welches Anweisungen umfasst, die, wenn sie von einem Computer ausgeführt werden, den Computer veranlassen, alle Schritte des Verfahrens nach einem der Ansprüche 1 bis 3 oder 4 bis 6 auszuführen.

9. Computerprogramm, welches Anweisungen umfasst, die, wenn das Programm von einer elektronischen Vorrichtung ausgeführt wird, die elektronische Vorrichtung veranlassen, alle Schritte des Verfahrens nach einem der Ansprüche 1 bis 3 oder 4 bis 6 auszuführen.

## Revendications

1. Procédé de communication par Ethernet, comportant :
l'envoi (S301), par un premier dispositif, d'un paramètre de temps à un second dispositif, le paramètre de temps comportant un paramètre d'au moins une durée parmi les suivantes : durée d'un état silencieux, durée d'un état de rafraîchissement, ou durée totale, et la durée totale étant une durée totale de l'état silencieux et de l'état de rafraîchissement ; et
le réglage, par le premier dispositif, d'une durée d'état dans un mode de repos à faible puissance, LPI, d'un Ethernet économe en énergie, d'après le paramètre de temps, l'envoi (S301), par un premier dispositif, d'un paramètre de temps à un second dispositif comportant :
soit
l'envoi, par le premier dispositif, du paramètre de temps au second dispositif dans un état de rafraîchissement dans le mode LPI ;
le mode LPI comportant au moins une période, et un état silencieux et un état de rafraîchissement existant dans chaque période ; et
une période effective du paramètre de temps étant une période actuelle, une période suivante de la période actuelle, N périodes qui suivent la période actuelle, ou une M^{ème} période à la suite de la période actuelle dans le mode LPI, N et M étant des entiers supérieurs ou égaux à 2,
soit
l'envoi, par le premier dispositif, du paramètre de temps au second dispositif dans un état actif ;
le mode LPI comportant au moins une période, et un état silencieux et un état de rafraîchissement existant dans chaque période ; et
une période effective du paramètre de temps étant I périodes qui sont dans le mode LPI et qui interviennent après l'état actif, ou étant une J^{ème} période qui est dans le mode LPI et qui intervient après l'état actif,
I et J étant des entiers supérieurs ou égaux à 1.

2. Procédé selon la revendication 1, le procédé comportant en outre :
l'envoi (S303), par le premier dispositif, d'au moins un type de données : données de service ou données d'opérations, d'administration et de maintenance, OAM, au second dispositif dans l'état de rafraîchissement dans le mode LPI.

3. Procédé selon l'une quelconque des revendications 1 ou 2, le procédé comportant en outre :
l'envoi (S303), par le premier dispositif, d'informations d'indication de changement au second dispositif, les informations d'indication de changement étant utilisées pour indiquer si la durée d'état du LPI doit être modifiée.

4. Procédé de communication par Ethernet, comportant :
la réception (S302), par un second dispositif, d'un paramètre de temps émis par un premier dispositif, le paramètre de temps comportant un paramètre d'au moins une durée parmi les suivantes : durée d'un état silencieux, durée d'un état de rafraîchissement, ou durée totale, et la durée totale étant une durée totale de l'état silencieux et de l'état de rafraîchissement ; et
le réglage, par le second dispositif, d'une durée d'état dans un mode de repos à faible puissance, LPI, d'un Ethernet économe en énergie, d'après le paramètre de temps,
la réception (S302), par un second dispositif, d'un paramètre de temps émis par un premier dispositif comportant :
soit
la réception, par le second dispositif, du paramètre de temps qui est émis par le premier dispositif dans un état de rafraîchissement dans le mode LPI ;
le mode LPI comportant au moins une période, et un état silencieux et un état de rafraîchissement existant dans chaque période ; et
une période effective du paramètre de temps étant une période actuelle, une période suivante de la période actuelle, N périodes qui suivent la période actuelle, ou une M^{ème} période à la suite de la période actuelle dans le mode LPI,
N et M étant des entiers supérieurs ou égaux à 2,
soit
la réception, par le second dispositif, du paramètre de temps qui est émis par le premier dispositif dans un état actif ;
le mode LPI comportant au moins une période, et un état silencieux et un état de rafraîchissement existant dans chaque période ; et
une période effective du paramètre de temps étant I périodes qui sont dans le mode LPI et qui interviennent après l'état actif, ou étant une J^{ème} période qui est dans le mode LPI et qui intervient après l'état actif,
I et J étant des entiers supérieurs ou égaux à 1.

5. Procédé selon la revendication 4, le procédé comportant en outre :
la réception, par le second dispositif, d'au moins un type de données : données de service ou données d'opérations, d'administration et de maintenance, OAM, qui est envoyé par le premier dispositif au second dispositif dans l'état de rafraîchissement dans le mode LPI.

6. Procédé selon l'une quelconque des revendications 4 ou 5, le procédé comportant en outre :
la réception, par le second dispositif, d'informations d'indication de changement émises par le premier dispositif ; et
le fait de faire déterminer, par le second dispositif, d'après les informations d'indication de changement, s'il convient de modifier la durée d'état du LPI.

7. Appareil, comportant des moyens prévus pour exécuter le procédé selon l'une quelconque des revendications 1 à 3 ou des revendications 4 à 6.

8. Support de stockage lisible par ordinateur, comportant des instructions qui, lorsqu'elles sont exécutées par un ordinateur, amènent l'ordinateur à réaliser toutes les étapes du procédé selon l'une quelconque des revendications 1 à 3 ou des revendications 4 à 6.

9. Programme informatique comportant des instructions qui, lorsque le programme est exécuté par un dispositif électronique, amènent le dispositif électronique à réaliser toutes les étapes du procédé selon l'une quelconque des revendications 1 à 3 ou des revendications 4 à 6.
